# EUROPÄISCHE PATENTANMELDUNG

(11) **EP 0 831 116 A1**
(43) Veröffentlichungstag der Anmeldung: **25.03.1998**
(21) Anmeldenummer: 97115797.9
(22) Anmeldetag: 11.09.1997
(51) Int. Cl.: C08K 3/04, C08L 59/00

(54) **Elektrostatisch lackierbare Formteile**

(30) Priorität: 18.09.1996 DE 19638036
(71) Anmelder: BASF AKTIENGESELLSCHAFT, 67056 Ludwigshafen (DE)
(72) Erfinder: Plachetta, Christoph, Dr., 67117 Limburgerhof (DE); Hennig, Ingolf, Dr., 68809 Neulussheim (DE); Keller, Bruno, 55263 Wackernheim (DE)

(57) **Zusammenfassung**

Verwendung von thermoplastischen Formmassen aus
A) 30 bis 94 Gew.-% eines Polyoxymethylenhomo- oder copolymerisats,
B) 6 bis 10 Gew.-% Ruß mit einem Porenvolumen (DBP-Adsorption) gemäß DIN 53 601 von mindestens 350 ml/100g
C) 0 bis 2 Gew.-% einer Alkali- oder Erdalkaliverbindung oder deren Mischungen
D) 0 bis 2 Gew.-% eines Polyamids
E) 0 bis 60 Gew.-% weiterer Zusatzstoffe und Verarbeitungshilfsmittel
wobei die Summe der Gewichtsprozente der Komponenten A bis E) jeweils 100 % ergibt,
zur Herstellung von elektrostatisch lackierbaren Formteilen.

## Beschreibung

Die Erfindung betrifft die Verwendung von thermoplastischen Formmassen aus
A) 30 bis 94 Gew.-% eines Polyoxymethylenhomo- oder copolymerisats,
B) 6 bis 10 Gew.-% Ruß mit einem Porenvolumen (DBP-Adsorption) gemäß DIN 53 601 von mindestens 350 ml/100g
C) 0 bis 2 Gew.-% einer Alkali- oder Erdalkaliverbindung oder deren Mischungen
D) 0 bis 2 Gew,-% eines Polyamids
E) 0 bis 60 Gew.-% weiterer Zusatzstoffe und Verarbeitungshilfsmittel wobei die Summe der Gewichtsprozente der Komponenten A bis E) jeweils 100% ergibt,
zur Herstellung von elektrostatisch lackierbaren Formteilen.

Weiterhin betrifft die Erfindung die hierbei erhältlich elektrostatisch lackierbaren Formteile.

POM Formmassen, welche Ruß enthalten sind unter anderem aus der EP-A 327 384 , DE-A 40 07 766 , EP-A 247 765 und EP 327 384 bekannt.

Weiterhin sind handelsübliche Produkte wie Ultraform® N2520 L (eingetragenes Warenzeichen der Ultraform GmbH) und Hostaform® C 9021 ELS (eingetragenes Warenzeichen der Hoechst AG) mit üblichen leitfähigen oder Farbrußen ausgestattet, welche zwecks antistatischer Ausrüstung oder zum Ableiten von statischer Elektrizität gut geeignet sind.

Die Verwendung derartiger Formteile sind beispielsweise allgemeinen Abhandlungen wie H.J. Mair, Elektrisch leitende Kunststoffe, Hanser Verlag 1989, S. 1 bis 18 oder R.G. Gilg, Ruß für leitfähige Kunststoffe, Kunststoffberater 22, S. 262 (1977) und 22, S. 312 (1977; S. Roth, H.J. Mair, elektrisch leitende Kunststoffe, GAK, Jahrgang 48 (Heft 9), S. 634-639 (1995) zu entnehmen.

In der genannten Literatur wird es durchgängig als Nachteil angesehen, daß Ruß in größeren Mengen, die mechanischen Eigenschaften von POM negativ beeinflußt, da Ruß ein saures Additiv darstellt und die POM-Matrix schädigt.

Die schlechteren mechanischen Eigenschaften wurden bislang durch Zugabe eines Schlagzähmodifiers wie thermoplastische Polyurethane. (TPU) ausgeglichen. Der Ruß reichert sich jedoch vorwiegend in der Elastomerphase an, so daß der für eine elektrostatische Lackierung notwendige Durchgangswiderstand nicht erreicht wird. Darüberhinaus ist bei den aus dem Stand der Technik bekannten oder handelsüblichen Produkten die Leitfähigkeit nicht ausreichend - oder der Durchgangswiderstand nicht niedrig genug -, um diese elektrostatisch lackieren zu können. Gemäß C. Koevoets, D. Noordegraaf, U. Hofmann, Kunststoffe 86 (1996)3, S. 358 bis 360 sind dazu Werte des spezifischen Durchgangswiderstandes von unter 10⁵ Ohm* cm notwendig, um eine elektrostatische Lackierung problemlos durchführen zu können.

Aus der EP-A 363 103 ist darüberhinaus bekannt, daß POM-Formmassen erst nach einer aufwendigen chemischen oder physikalischen Vorbehandlung elektrostatisch lackierbar sind. Für Anwendungen in der Automobilindustrie sind aus Design und Oberflächenschutzgründen elektrostatisch lackierbare Teile erforderlich.

Aufgabe der vorliegenden Erfindung war es daher, Formteile aus Polyoxymethylen zur Verfügung zu stellen, die elektrostatisch lackierbar sind und gleichzeitig eine gute Kraftstoff- und Chemikalienbeständigkeit, sowie eine gute Steifigkeit, insbesondere bei höheren Temperaturen aufweisen.

Demgemäß wurde die eingangs definierte Verwendung von POM-Formmassen gefunden. Bevorzugte Ausführungsformen sind den Unteransprüchen zu entnehmen.

Als Komponente A) enthalten die erfindungsgemäß verwendbaren Formmassen 30 bis 94, vorzugsweise 50 bis 94 Gew.-% und insbesondere 60 bis 90 Gew.-% eines Polyoxymethylenhomo- oder Copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂0- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂0- noch bis zu 50, vorzugsweise 0,1 bis 20 und insbesondere 0,3 bis 10 mol-% an wiederkehrenden Einheiten 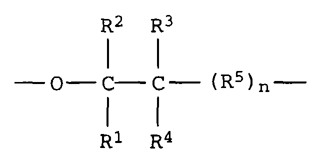 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁-bis C₄-Alkyl- oder C₁-bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 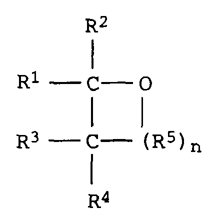 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 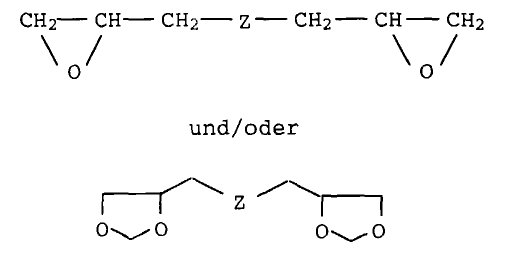 wobei Z eine chemische Bindung, -O-, -ORO- (R= C₁-bis C₈-Alkylen oder C₂-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente A) können insbesondere auch Produkte eingesetzt werden, die noch einen relativ hohen Anteil (im allg. > 0,1 Gew.-%) an thermisch instabilen Anteilen enthalten. Die Komponenten C) und D) insbesondere wenn sie vor der Mischung mit dem Polyoxymethylen vorgemischt werden, stabilisieren derartige Roh-Polyoxymethylene sehr gut.

Als Komponente B) enthalten die erfindungsgemäß verwendbaren Formmassen 6 bis 10, vorzugsweise 6 bis 8 und insbesondere 6 bis 7 Gew.-% Ruß mit einem Porenvolumen (DBP Dibutylphthalat-Adsorption) gemäß DIN 53 601 von mindestens 350 ml/g 100 g, vorzugsweise mindestens 370 ml/100 g.

Die DBP-Adsorptionsrate wird im allgemeinen nach DIN 53 601 oder ASTM-D 2414 bestimmt und stellt ein Maß für die Struktur des jeweiligen Rußes dar. Unter Struktur versteht man die Verkettung von Rußprimärteilchen zu Aggregaten. Zur Bestimmung dieser Kenngröße wird zu 10 g Pigmentruß, der in einem Kneter mit meßbarer Kraftübertragung (Plastographen) vorgelegt wird, so lange Dibutylphthalat zugetropft, bis das maximale Drehmoment (Netzpunkt des Rußes) überschritten ist.

Vorzugsweise weist die Komponente B) eine spezifische Oberfläche nach BET (gemäß DIN 60 132 oder ASTM D 3037) von mindestens 900, vorzugsweise 950 m²/g und eine Iodadsorption von (gemäß DIN 53 582 oder ASTM-D 1510) von mindestens 950, vorzugsweise 1000 und insbesondere 1050 mg/g auf.

Die mittlere Primärteilchengröße beträgt üblicherweise 10 bis 50, vorzugsweise 25 bis 35 nm.

Derartige Rußtypen sind z.B unter dem Warenzeichen Printex® XE2 (Degussa AG) oder Ketjen Black EC DJ 600 (Akzo) erhältlich.

Als Komponente C) enthalten die erfindungsgemäß verwendbaren Formmassen bezogen auf das Gesamtgewicht der Komponenten A) bis E) 0 bis 2 vorzugsweise 0,001 bis 1,5 und insbesondere 0,1 bis 1 Gew.-% einer Alkali- und/oder Erdalkaliverbindung.

Es können allgemein alle Erdalkali- und/oder Alkalimetallkationen verwendet werden, wobei Lithium-, Natrium-, Kalium- und Calcium-Kationen bevorzugt sind.

Unter Alkali- und/oder Erdalkaliverbindungen sollen erfindungsgemäß solche anorganischen oder organischen Salze verstanden werden, welche in wäßriger Lösung oder Suspensionen alkalisch reagieren.

Als anorganische Salze seien beispielsweise Carbonate, Hydrogencarbonate, Hydroxide, Oxide oder Phosphate genannt, wobei Alkalicarbonate wie Kaliumcarbonat und Natriumcarbonat besonders bevorzugt sind.

Organische Salze sind z.B. Alkoholate von C₂-bis C₁₂ Alkoholen, Phenolate oder Salze von Carbonsäuren mit 2 bis 12 C-Atomen, wobei Citrate, Oxalate oder Tartrate besonders bevorzugt sind.

Besonders bevorzugt sind Alkalihydroxide, insbesondere Kaliumhydroxid und Natriumhydroxid, welche vorzugsweise in Form einer wäßrigen 10 bis 70 %igen Lösung, vorzugsweise 40 bis 60 %ig bei der Herstellung der POM-Formmassen zugegeben werden, wobei die Dosierung gemeinsam mit dem Ruß B) erfolgen kann.

Die als Komponenten D) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc. 1988 beschrieben werden, können eingesetzt werden, wobei der Schmelzpunkt des Polyamids vorzugsweise unter 225⁰C, vorzugsweise unter 215⁰C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Fa. Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt 0 bis 2, vorzugsweise 0,005 bis 1,8 Gew.-%, bevorzugt 0,04 bis 1,6 Gew.-%.

Als Komponente E) können die erfindungsgemäß verwendbaren Formmassen bis zu 60, vorzugsweise bis zu 50 Gew.-% üblicher Zusatzstoffe oder Verarbeitungshilfsmittel enthalten.

Als Nukleierungsmittel können gemäß einer bevorzugten Ausführungsform die Formmassen ein Melamin-Formaldehyd-Kondensat enthalten. Geeignete Produkte werden z.B. in der DE-A 25 40 207 beschrieben.

Als sterisch gehinderte Phenole (Antioxidantien) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 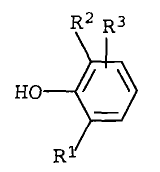 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und
R³ eine Alkylgruppe, eine substituierte Alkylgruppe, eine Alkoxygruppe oder eine substituierte Aminogruppe.

Antioxidantien der genannten Art werden beispielsweise beschrieben in der DE-A 27 02 661 (US-A 4 360 617).

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 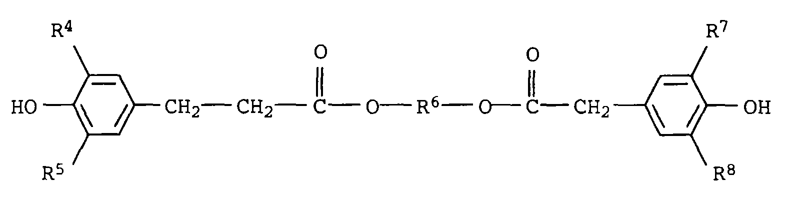 wobei R⁴, R⁵, R⁷ und R8 unabhängig voneinander C₁-C₈-Alkylgruppen, die ihrerseits substituiert sein können (mindestens eine davon ist eine sterisch anspruchsvolle Gruppe) und R⁶ einen zweiwertigen aliphatischen Rest mit 1 bis 10 C-Atomen, der in der Hauptkette auch C-0-Bindungen aufweisen kann.

Bevorzugte Verbindungen, die dieser Formel entsprechen sind

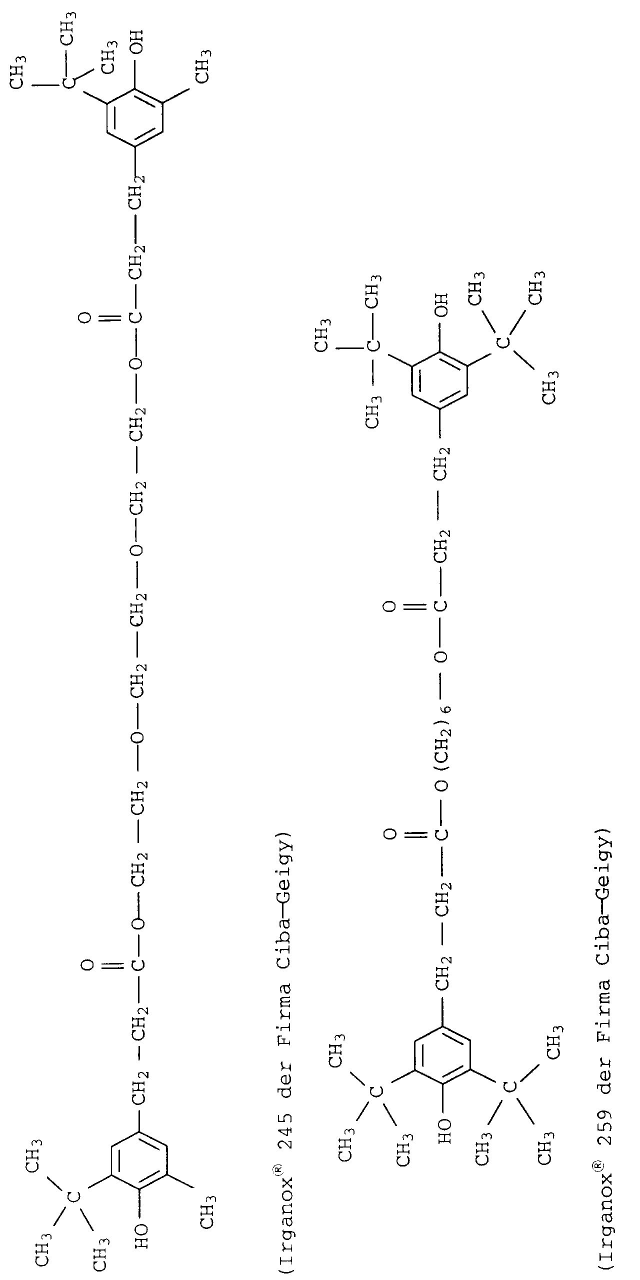

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythryl-tetrakis-[3-(3,5-di-tert.-butyl-4-hydroxyphenyl)-propionat], Distraryl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxy-benzyl-dimethylamin und N,N'-Hexamethylenbis-3,5-di-tert.-butyl-4-hydroxyhydrocinnamid.

Als besonders wirksam erwiesen haben sich und daher vorzugsweise verwendet werden 2,2'-Methylen-bis-((4-methyl-6-tert.-butylphenyl), 1,6-Hexandiol-bis-[3,5-di-tert.-butyl-4-hydroxyphenyl)-propionat (Irganox® 259), Pentaerythrityl-tetrakis-[3-(3,5-di-tert.-butyl-4-hydroxyphenyl)-propionat] und das vorstehend beschriebene Irganox® 245 der Firma Ciba Geigy, das besonders gut geeignet ist.

Die Antioxidantien, die einzeln oder als Gemische eingesetzt werden können, können in einer Menge von 0,05 bis 2 Gew.-%, vorzugsweise von 0,1 bis 1,0 Gew.-%, eingesetzt werden.

In manchen Fällen haben sich sterisch gehinderte Phenole mit nicht mehr als einer sterisch gehinderten Gruppe in ortho-Stellung zu phenolischen Hydroxygruppen als besonders vorteilhaft erwiesen; insbesondere bei der Beurteilung der Farbstabilität der Lagerung in diffusem Licht über längere Zeiträume.

Durch die Mitverwendung eines Polykondensationsprodukts aus 2,2-Di(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Fa. Shell). Das Molekulargewicht der Polykondensate kann in weiten Grenzen variieren; prinzipiell sind die im Handel erhältlichen Typen sämtlich geeignet.

Als Komponenten E) können weiterhin 0,002 bis 2,0 Gew.-%, vorzugsweise 0,005 bis 0,5 Gew.-% und insbesondere 0,01 bis 0,3 Gew.-%, eines oder mehrerer Erdalkalisilikate und/oder Erdalkaliglycerophosphate enthalten sein. Als Erdalkalimetalle zur Bildung der Silikate und Glycerophosphate haben sich vorzugsweise Calcium und insbesondere Magnesium vorzüglich bewährt. Anwendung finden zweckmäßigerweise Magnesiumglycerophosphat und/oder Calciumsilikat und vorzugsweise Magnesiumsilikat, wobei als Erdalkalisilikate, insbesondere solche bevorzugt sind, die durch die Formel

Me · x SiO₂ · n H₂O

beschrieben werden, in der bedeuten
- Me: ein Erdalkalimetall, vorzugsweise Calcium oder insbesondere Magnesium,
- x: eine Zahl von 1,4 bis 10, vorzugsweise 1,4 bis 6 und
- n: eine Zahl gleich oder größer als 0, vorzugsweise 0 bis 8.

Diese Verbindungen E) werden vorteilhafterweise in feingemahlener Form eingesetzt. Produkte mit einer durchschnittlichen Teilchengröße von kleiner als 100 µm, vorzugsweise von kleiner als 50 µm, sind besonders gut geeignet.

Als Komponente E) enthalten die erfindungsgemäßen thermoplastischen Formmassen 0 bis 50, vorzugsweise 0 bis 45 Gew.-% eines schlagzähmodifizierenden Polymeren oft auch als kautschukelastisches Polymerisat oder Elastomer bezeichnet).

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 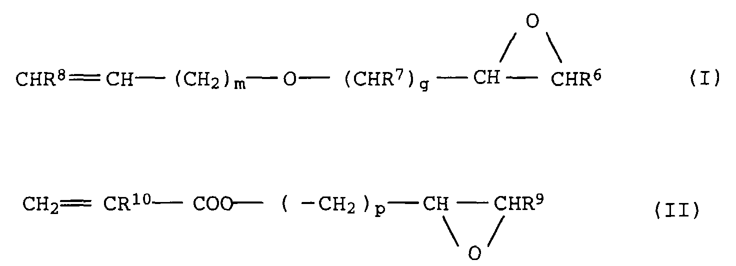 wobei R⁶-R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen- enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
insbesondere 0,3 bis 20 Gew.-% Glycidylacrylat
und/oder
- 0 bis 40,: insbesondere 0,1 bis 20 Gew.-% Glycidylmethacrylat,
und
- 1 bis 50,: insbesondere 10 bis 40 Gew.-% n-Butylacrylat
und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerisation" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20⁰C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino oder Amidgruppen sowie funktionelle Gruppen, die durch Mitverwendung von Monomeren der allgemeinen Formel 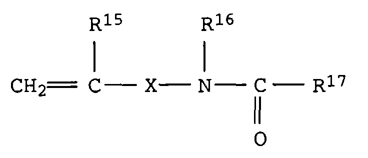 eingeführt werden können,
wobei die Substituenten folgende Bedeutung haben können:
- R¹⁵: Wasserstoff oder eine C₁-bis C₄-Alkylgruppe,
- R¹⁶: Wasserstoff, eine C₁-bis C₈-Alkylgruppe oder eine Arylgruppe, insbesondere Phenyl,
- R¹⁷: Wasserstoff, eine C₁-bis C₁₀-Alkyl-, eine C₆-bis C₁₂-Arylgruppe oder -OR¹⁸
- R¹⁸: eine C₁-bis C₈-Alkyl- oder C₆-bis C₁₂-Arylgruppe, die gegebenenfalls mit O- oder N-haltigen Gruppen substituiert sein können,
- x: eine chemische Bindung, eine C₁-bis C₁₀-Alkylen- oder C₆-C₁₂ -Arylengruppe oder 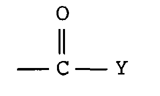
- V: O-Z- oder NH-Z und
- Z: eine C₁-bis C₁₀-Alkylen- oder C₆-bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente E) bis zu 5 Gew.-%, vorzugsweise nicht mehr als 3 Gew.-%, bezogen auf E).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexyl- acrylat oder deren Mischungen, ggf. zusammen mit vernetzenden Monomeren | Styrol, Acrylnitril, (Meth)acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere E) können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Kommerziell im Handel sind solche Produkte z.B. unter den Bezeichnungen Desmopan® (Bayer AG) oder Elastollan® (Elastogran Polyurethane GmbH) erhältlich.

Selbstverständlich können auch Mischungen der vorstehend aufgeführten Kautschuktypen eingesetzt werden.

Als Komponente F) können die erfindungsgemäßen Formmassen 0 bis 50, vorzugsweise 5 bis 40 Gew.-% eines faser- oder teilchenförmigen Füllstoffs oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Weitere übliche Zusatzstoffe und Verarbeitungshilfsmittel sind Zusätze zum Abfangen von Formaldehyd (Formaldehyd-Scavenger), Weichmacher, Schmiermittel, Entformungshilfsmittel, Haftvermittler und Pigmente genannt.

Der Anteil solcher Zusätze liegt im allgemeinen im Bereich von 0,001 bis 5 Gew.-%.

Die Herstellung der erfindungsgemäßen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Anschließend werden mittels üblicher z.B. Spritzgußverarbeitungsverfahren Formteile hergestellt, welche mittels bekannter Verfahren elektrostatisch lackierbar sind z.B. Glasurit-Handbuch: Lacke und Farben, 11. Aufl., Curt-Vincentz-Verlag, Hannover 1984, S. 358-371 oder K.-A. van Oeteren, Korrosionsschutz durch Beschichtungsstoffe, Band 2, Carl-Hanser-Verlag München 1980, S. 1366-1371. Die Formteile zeichnen sich darüber hinaus durch gute mechanische Eigenschaften (insbesondere ein hoher Elastizitätsmodul) und gute Kraftstoff- sowie Chemikalienbeständigkeit aus.

Daher eignen sich derartige Formteile ganz besonders als Karosserie- oder Verkleidungsteile für den Automobilbau wie Platten, Teile für Außenspiegel und Türgriffe sowie Heckklappengriffe.

### Beispiele:

Es wurden folgenden Komponenten eingesetzt:

### Komponente A)

Polyoxymethylencopolymerisat aus 95 Gew.-% Trioxan und 5 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen Schmelzindex von 25 ml/10 min bei 190°C und 2,16 N, nach ISO 1133.

### Komponente B)

Ruß mit einer spezifischen Oberfläche nach BET (gemäß DIN 66 132 von 950 m²/g, DBP-Adsorption gemäß DIN 53 601 von 380 mg/g, und einer Iod-Adsorption gemäß DIN 53 582 von 1075 mg/g.

(Printex® XE2, Degussa AG)

### Komponente C)

Natriumhydroxid (als 50 gew.-%ige wäßrige Lösung dosiert)

### Komponente D)

Polyamid mit einem Molekulargewicht von 3000, hergestellt aus 37 Gew.-% ε-Caprolactam, 63 Gew.-% einer äquimolaren Mischung aus Adipinsäure und Hexamethylendiamin, unter Verwendung von Proprionsäure als Regler.

### Komponente E

E/1: Irganox® 245 (Ciba-Geigy AG): 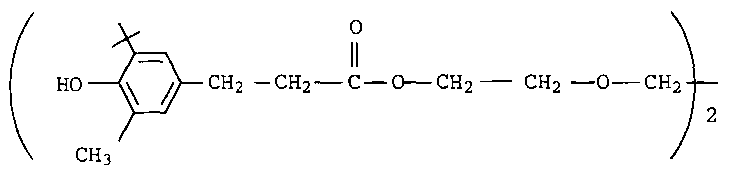
E/2: Synthetisches Mg-Silicat (Ambosol® der Firma Societe Nobel, Bozel, Puteaux) mit folgenden Eigenschaften

| | |
|---|---|
| Gehalt an MgO: | ≥ 14,8 Gew.-% |
| Gehalt an SiO₂: | ≥ 59 Gew.-% |
| Verhältnis SiO₂ : MgO: | 2,7 mol/mol |
| Schüttdichte: | 20 bis 30 g/100 ml |
| Glühverlust: | < 25 Gew.-% |

E/3: Melamin-Formaldehyd-Kondensat gemäß Beispiel 1 der DE-A 25 40 207 eingesetzt.

Zur Herstellung der Formmassen wurde die Komponente A mit den in der Tabelle 1 angegebenen Mengen der Komponenten D und E in einem Trockenmischer bei einer Temperatur von 23°C gemischt. Die so erhaltene Mischung wurde in einem Doppelschneckenextruder mit Entgasungsvorrichtung (ZSK 28 der Firma Werner & Pfleiderer) eingebracht, bei 230°C und homogenisiert die Komponenten B) und C) (als 50 %ige wäßrige Lösung) gemeinsam zudosiert, entgast und das homogenisierte Gemisch durch eine Düse als Strang ausgepreßt und granuliert.

Auf einer Spritzgußmaschine wurden bei 200°C Massetemperatur und 80°C Werkzeugtemperatur Probekörper gespritzt. Der Elastizitätsmodul wurde gemäß DIN 53457 (bzw. ISO 527/2) bestimmt. Der spezifische Durchgangswiderstand DGW [Ω * cm] wurde gemäß IEC 93 bestimmt. Der Oberflächenwiderstand OFW [Ω] wurde gemäß IEC 93 mit Leitsilberstrichelektroden (Elektrodengeometrie: 50x5 mm, geerdete Gegenelektrode).

Die elektrostatische Lackierung wurde bei einem Potential von 90 KV durchgeführt. Als Lack wurde ein Basislack (GE 70) von BASF Lacke und Farben eingesetzt.

Die Ergebnisse der Messungen und die Zusammensetzung der Formmassen sind den Tabellen zu entnehmen.

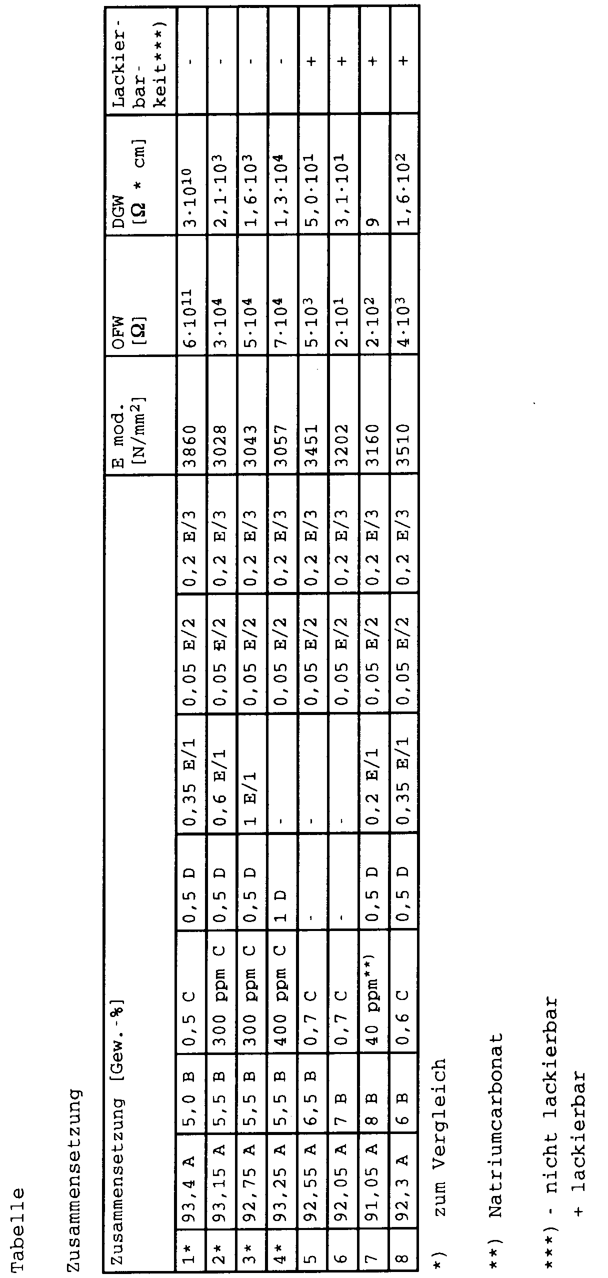

## Patentansprüche

1. Verwendung von thermoplastischen Formmassen aus
A) 30 bis 94 Gew.-% eines Polyoxymethylenhomo- oder copolymerisats,
B) 6 bis 10 Gew.-% Ruß mit einem Porenvolumen (DBP-Adsorption) gemäß DIN 53 601 von mindestens 350 ml/100g
C) 0 bis 2 Gew.-% einer Alkali- oder Erdalkaliverbindung oder deren Mischungen
D) 0 bis 2 Gew.-% eines Polyamids
E) 0 bis 60 Gew.-% weiterer Zusatzstoffe und Verarbeitungshilfsmittel
wobei die Summe der Gewichtsprozente der Komponenten A bis E) jeweils 100 % ergibt,
zur Herstellung von elektrostatisch lackierbaren Formteilen.

2. Verwendung nach Anspruch 1, dadurch gekennzeichnet, daß der Ruß B) eine spezifische Oberfläche nach BET (gemäß DIN 66 132) von mindestens 900 m² /g aufweist.

3. Verwendung nach den Ansprüchen 1 oder 2, dadurch gekennzeichnet, daß der Ruß B) eine Iod-Adsorption (gemäß DIN 53 582) von mindestens 950 mg/g aufweist.

4. Verwendung nach den Ansprüchen 1 bis 3, dadurch gekennzeichnet, daß als Komponente C) ein Alkalihydroxid eingesetzt wird.

5. Verwendung nach den Ansprüchen 1 bis 4, dadurch gekennzeichnet, daß als Komponente C) Natriumhydroxid eingesetzt wird.

6. Verwendung nach den Ansprüchen 1 bis 5, dadurch gekennzeichnet, daß die Komponente D) in Mengen von 0,001 bis 2 Gew.-% eingesetzt wird.

7. Elektrostatisch lackierbare Formteile, erhältlich gemäß den Verwendungsansprüchen 1 bis 6

8. Elektrostatisch lackierbare Formteile nach Anspruch 7, dadurch kennzeichnet, daß diese Formteile Karosserieteile oder Verkleidungsteile für den Automobilbau sind.

9. Elektrostatisch lackierbare Karosserie- oder Verkleidungsteile nach Anspruch 8, dadurch gekennzeichnet, daß diese Platten, Heckklappengriffe, Teile für Außenspiegel und Türgriffe sind.
